# EUROPÄISCHE PATENTSCHRIFT

(11) **EP 1 485 190 B1**
(45) Veröffentlichungstag und Bekanntmachung des Hinweises auf die Patenterteilung: **27.06.2007**
(21) Anmeldenummer: 03743832.2
(22) Anmeldetag: 04.03.2003
(51) Int. Cl.: B01D 53/14

(54) **VERFAHREN ZUM ENTSÄUERN EINES FLUIDSTROMS UND WASCHFLÜSSIGKEIT ZUR VERWENDUNG IN EINEM DERARTIGEN VERFAHREN**
METHOD FOR DEACIDIFYING A FLUID STREAM AND WASHING LIQUID USED IN SUCH A METHOD
PROCEDE DE DESACIDIFICATION D'UN COURANT FLUIDIQUE ET LIQUIDE LAVEUR UTILISE DANS CE PROCEDE

(30) Priorität: 12.03.2002 DE 10210729
(43) Veröffentlichungstag der Anmeldung: 15.12.2004
(73) Patentinhaber: BASF Aktiengesellschaft, 67056 Ludwigshafen (DE)
(72) Erfinder: ASPRION, Norbert, 68163 Mannheim (DE); GROSSMAN, Christoph, The Woodlands, TX 77381 (US)
(86) Internationale Anmeldenummer: PCT/EP2003/002187
(87) Internationale Veröffentlichungsnummer: WO 2003/076049

(56) Entgegenhaltungen:
- EP-A- 0 647 462
- EP-A- 0 879 631
- US-A- 4 240 922

## Beschreibung

Verfahren zum Entsäuern eines Fluidstroms, der Sauergase als Verunreinigungen enthält, wobei man in wenigstens einem Absorptionsschritt den Fluidstrom mit einer Waschflüssigkeit in innigen Kontakt bringt, bei der es sich um eine wässrige Lösung enthaltend
a) tertiäre aliphatische Alkanolamine (Alkanolamin A), wobei es sich bei mindestens 30 Gew.% der tertiären aliphatischen Alkanolamine um 3-Dimethylamino-1-propanol handelt und
b) sekundäre aliphatische Amine (Aktivator B), wobei es sich bei mindestens 20 Gew.% der sekundären aliphatischen Amine um Piperazin handelt,
und man den von Sauergasen weitgehend gereinigten Fluidstrom und die mit Sauergasen beladene Waschflüssigkeit voneinander trennt.

Die vorliegende Erfindung betrifft ein Verfahren zum Entsäuern eines Fluidstroms, der Sauergase als Verunreinigungen enthält, sowie eine Wasch- bzw. Absorptionsflüssigkeit zur Verwendung in einem derartigen Verfahren.

In zahlreichen Prozessen in der chemischen Industrie treten Fluidströme auf, die Sauergase, wie z.B. CO₂, H₂S, SO₂, CS₂, HCN, COS oder Mercaptane als Verunreinigungen enthalten. Bei diesen Fluidströmen kann es sich beispielsweise um Gasströme (wie Erdgas, Synthesegas aus Schweröl oder schweren Rückständen, Raffineriegas oder bei der partiellen Oxidation von organischen Materialien, wie beispielsweise Kohle oder Erdöl, entstehende Reaktionsgase) oder um flüssige oder verflüssigte Kohlenwasserstoffströme (wie LPG (Liquified Petroleum Gas) oder NGL (Natural Gas Liquids)) handeln.

Bevor diese Fluide transportiert oder weiterverarbeitet werden können, muss der Sauergasgehalt des Fluids deutlich reduziert werden. CO₂ muss beispielsweise aus Erdgas entfernt werden, da eine hohe Konzentrationen von CO₂ den Brennwert des Gases reduziert. Außerdem kann CO₂ in Verbindung mit in den Fluidströmen häufig mitgeführtem Wasser zu Korrosion an Leitungen und Armaturen führen.

Die Entfernung von Schwefelverbindungen aus diesen Fluidströmen ist aus unterschiedlichen Gründen von besonderer Bedeutung. Beispielsweise muss der Gehalt an Schwefelverbindungen von Erdgas durch geeignete Aufbereitungsmaßnahmen unmittelbar an der Erdgasquelle reduziert werden, denn auch die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übelriechend und, allen voran Schwefelwasserstoff (H₂S), toxisch.

Es wurden daher bereits zahlreiche Verfahren zum Entfernen von Sauergasbestandteilen aus Fluidströmen wie Kohlenwasserstoffgasen, LPG oder NGL entwickelt. Bei den am weitesten verbreiteten Verfahren wird das Sauergase enthaltende Fluidgemisch mit einem organischen Lösungsmittel oder einer wässrigen Lösung eines organischen Lösungsmittels in einer sogenannten Gaswäsche oder einer Flüssig/Flüssig-Extraktion in Kontakt gebracht.

Zu derartigen Gaswaschverfahren und entsprechenden in diesen Verfahren eingesetzten Waschlösungen existiert auch eine umfangreiche Patentliteratur. Grundsätzlich kann man dabei zwei unterschiedlichen Typen von Absorptions- bzw. Lösungsmitteln für die Gaswäsche unterscheiden:

Zum einen werden sog. physikalische Lösungsmittel eingesetzt, in denen nach erfolgter Absorption die gelösten Sauergase in molekularer Form vorliegen. Typische physikalische Lösungsmittel sind Cyclotetramethylensulfon (Sulfolan) und dessen Derivate, aliphatische Säureamide, NMP (N-Methylpyrrolidon) N-alkylierte Pyrrolidone und entsprechende Piperidone, Methanol und Gemische aus Dialkylethern von Polyethylenglykolen (Selexol®, Union Carbide, Danbury, Conn., USA).

Zum anderen werden chemische Lösungsmittel eingesetzt, deren Wirkungsweise auf chemischen Reaktionen beruht, bei denen nach erfolgter Absorption die gelösten Sauergase in Form chemischer Verbindungen vorliegen. Beispielsweise werden bei den im industriellen Maßstab am häufigsten als chemische Lösungsmittel eingesetzten wässrigen Lösungen aus anorganischen Basen (z.B. Pottaschelösung im Benfield-Prozess) oder organischen Basen (z.B. Alkanolamine) beim Lösen von Sauergasen Ionen gebildet. Das Lösungsmittel kann durch Entspannen auf einen niedrigeren Druck oder Strippen regeneriert werden, wobei die ionischen Spezies zu Sauergase zurück reagieren und/oder mittels Dampf abgestrippt werden. Nach dem Regenerationsprozess kann das Lösungsmittel wiederverwendet werden. Bevorzugte, beim Entfernen von Sauergasverunreinigungen aus Kohlenwasserstoffgasströmen verwendete Alkanolamine umfassen Monoethanolamin (MEA), Diethanolamin (DEA), Triethanolamin (TEA), Diethylethanolamin (DEEA), Diisopropylamin (DIPA), Aminoethoxyethanol (AEE) und Methyldiethanolamin (MDEA).

Primäre und sekundäre Alkanolamine sind insbesondere für Gaswäschen geeignet, bei denen das gereinigte Gas einen sehr niedrigen CO₂-Gehalt aufweisen muss (z.B. 10 ppmᵥ CO₂). Der Stickstoff der primären und sekundären Alkanolamine reagiert direkt mit Kohlendioxid unter Bildung von löslichem Carbamat. In der wässrigen Aminlösung steht das Carbamat mit Bicarbonat in einem charakteristischen Gleichgewicht. Zum Regenerieren der Aminlösung wird im industriellen Einsatz häufig ein zweistufiger Regenerationsprozess eingesetzt, wobei man das beladene Lösungsmittel zunächst in einer oder mehreren Flash-Kolonnen entspannt, so dass ein Teil des absorbierten CO₂ aus der Lösung verdampft. Restliches Kohlendioxid und gegebenenfalls weitere absorbierte Sauergase werden anschließend durch Strippen mit Dampf entfernt. Lösungsmittel, die primäre und sekundäre Alkanolamine enthalten, erfordern jedoch zum Zersetzen des Carbamats eine größere Mengen an Dampf als tertiäre Amine und entsprechend viel Wärmeenergie; deshalb werden häufig tertiäre Amine eingesetzt.

Aus der europäischen Patentanmeldung EP-A 0 322 924 ist bekannt, eine wässrige Aminlösung, die tertiäre Alkanolamine, insbesondere MDEA, enthält, zum Entsäuern von Gasströmen zu verwenden. Im Gegensatz zu primären und sekundären Alkanolaminen reagieren tertiäre Alkanolamine nicht direkt mit Kohlendioxid, da das Amin voll substituiert ist. Vielmehr wird Kohlendioxid mit dem tertiären Alkanolamin und mit Wasser zu Bicarbonat in einer Reaktion mit geringer Reaktionsrate umgesetzt. Da keine direkte Bindung zwischen tertiären Alkanolaminen und Kohlendioxid entsteht, kann die Aminlösung sehr wirtschaftlich regeneriert werden. In vielen Fällen reicht dabei eine Flash-Regenerierung mit einer oder mehreren Entspannungsstufen aus. Eine optionale zusätzliche thermische Regenerierung erfordert wesentlich weniger Energie als im Falle von Lösungen aus primären oder sekundären Alkanolaminen. Tertiäre Amine eignen sich insbesondere für eine selektive Entfernung von H₂S aus Gasgemischen, die H₂S und CO₂ enthalten.

Nachteilig an der Verwendung von tertiären Alkanolaminlösungen ist allerdings, dass wegen der geringen Reaktionsrate des Kohlendioxids der Waschprozess mit einer sehr hohen Verweilzeit durchgeführt werden muss. Die benötigten Absorptions- und Desorptionskolonnen sind daher, verglichen mit Systemen, bei denen entweder primäre oder sekundäre Alkanolamine eingesetzt werden, sehr hoch.

Daher wurde versucht, die Absorptionsrate von Kohlendioxid in wässrigen Lösungen von tertiären Alkanolaminen durch Zugabe weiterer Verbindungen, die als Aktivatoren oder Promotoren bezeichnet werden, zu erhöhen.

In der deutschen Patentanmeldung DE-A-1 542 415 wurde vorgeschlagen, die Wirksamkeit sowohl von physikalischen Lösungsmitteln wie auch von chemischen Lösungsmitteln durch Zugabe von Monoalkylalkanolaminen oder von Morpholin und dessen Derivaten zu erhöhen. In EP-A-0 160 203 wird Monoethanolamin als Aktivator erwähnt. In der deutschen Patentanmeldung DE-A-1 904 428 wird die Zugabe von Monomethylethanolamin (MMEA) als Beschleuniger zur Verbesserung der Absorptionseigenschaften einer MDEA-Lösung beschrieben.

In dem US-Patent US 4,336,233 wird eine der derzeit wirksamsten Waschflüssigkeiten zum Entfernen von CO₂ und H₂S aus einem Gasstrom beschrieben. Es handelt sich dabei um eine wässrige Lösung von Methyldiethanolamin (MDEA) und Piperazin als Absorptionsbeschleuniger oder Aktivator (aMDEA®, BASF AG, Ludwigshafen). Die dort beschriebene Waschflüssigkeit enthält 1,5 bis 4,5 mol/l Methyldiethanolamin (MDEA) und 0,05 bis 0,8 mol/l, bevorzugt bis zu 0,4 mol/l Piperazin. Das Entfernen von CO₂ und H₂S unter Verwendung von MDEA wird ferner in den folgenden Patenten der Anmelderin detaillierter beschrieben: US 4,551,158; US 44,553,984; US 4,537,753; US 4,999,031; CA 1 291 321 und CA 1 295 810.

Aus der internationalen Patentanmeldung WO 89/11327 ist eine Absorptions- bzw. Waschflüssigkeit bekannt, die aus einer wässrigen Aminlösung besteht, die tertiäre Amine, sowie geringe Mengen Polyamine, beispielsweise aliphatische Diamine, als Aktivator enthält.

Aus der EP-A-672 446 sind Absoprtionsflüssigkeiten für die Sauergaswäsche beschrieben, die u.a. auch DMAP enthalten können.

In der EP-A-879 631 ist ein Verfahren zur Kohlendioxidentfernung aus Gasströmen beschrieben. Als Waschlösung werden wässrige Mischungen vorgeschlagen, die als Aminkomponente eine Kombination von sekundären Aminen und tertiären Aminen enthalten. In Form einer listenartigen Beschreibung wird als sekundäres Amin u.a. auch Piperazin und als Alkanolamin u.a. auch von 3-Dimethylamino-1-propanol (DMAP) genannt.

Aufgabe der vorliegenden Erfindung ist es, ein verbessertes Verfahren zum Entsäuern eines Fluidstroms, der Sauergase als Verunreinigungen enthält, durch Gaswäsche anzugeben, wobei Sauergase wie CO₂, H₂S, COS, CS₂ oder Mercaptane wirksam aus dem Fluidstrom entfernt werden können und die Beladbarkeit der Waschflüssigkeit mit Sauergasen bei höheren Gesamtdrücken (> 2 bar bevorzugt > 5 bar) gegenüber den bekannten Verfahren verbessert wird.

Gelöst wird diese Aufgabe durch das Verfahren gemäß vorliegendem Anspruch 1.

Gegenstand der vorliegenden Erfindung ist daher ein Verfahren zum Entsäuern eines Fluidstroms, der Sauergase, wie CO₂, H₂S, COS, CS₂ oder Mercaptane als Verunreinigungen enthält, wobei man in wenigstens einem Absorptionsschritt den Fluidstrom mit einer Waschflüssigkeit in innigen Kontakt bringt, die Wasser, 3-Dimethylamino-1-propanol (DMAP) und Piperazin enthält. Dabei werden die Sauergase aus dem Fluidstrom entfernt und von der Waschflüssigkeit absorbiert. Der von Sauergasen weitgehend gereinigte Fluidstrom und die mit Sauergasen beladene Waschflüssigkeit werden anschließend voneinander getrennt. Überraschend wurde gefunden, dass die Verwendung von 3-Dimethylamino-1-propanol die Beladbarkeit der Waschflüssigkeit gegenüber bekannten Waschflüssigkeiten deutlich erhöht.

Gegenstand der vorliegenden Erfindung ist daher in allgemeinster Form die Verwendung von wässrigen Waschlösungen, die 3-Dimethylamino-1-propanol und Piperazin enthalten, zum Entfernen von Sauergasen bei Gesamtdrücken ab 2 bar aus einem sauergashaltigen Fluidstrom.

Gegenstand der vorliegenden Erfindung ist auch eine Absorptions- bzw. Waschflüssigkeit, die insbesondere für die Verwendung in dem erfindungsgemäßen Verfahren geeignet ist, die Wasser, 3-Dimethylamino-1-propanol und Piperazin enthält.

Die Summe der Konzentration aller in der Waschlösung enthaltenen tertiären aliphatischen Alkanolamine liegt vorteilhaft im Bereich von 10 bis 60 Gew.%. Vorzugsweise beträgt die Alkanolaminkonzentration 20 bis 60 Gew.% und besonders bevorzugt 30 bis 60 Gew.%. Die Konzentration aller in der Waschlösung enthaltenen Aktivatoren B beträgt vorteilhaft 0,1 bis 50 Gew.%, vorzugsweise 0,1 bis 40 Gew.% und besonders bevorzugt 0,1 bis 30 Gew.%.

Der Anteil von DMAP an den Akanolaminen A beträgt bevorzugt 30 bis 100 Gew.% und besonders bevorzugt 50 bis 100 Gew.-%. Ganz besonders bevorzugt wird als Alkanolamin A ausschließlich DMAP eingesetzt.

Der Anteil von Piperazin an den Akativatoren B beträgt bevorzugt 20 bis 100 Gew.% und besonders bevorzugt 40 bis 100 Gew.-%. Ganz besonders bevorzugt wird als Aktivator B ausschließlich Piperazin eingesetzt.

Diese Angaben beziehen sich auf die einsatzbereite Waschflüssigkeit. Hergestellt wird die erfindungsgemäße Waschflüssigkeit üblicherweise als Konzentrat, das vom Nutzer durch Zugabe von Wasser auf die Endkonzentration verdünnt wird.

Bei den Alkanolaminen A, die neben DMAP in der Waschlösung enthalten sein können, kann es sich um übliche in der Gas- bzw. LPG-Wäsche bewährte Alkanolamine handeln, wie sie beispielsweise in WO 89/11327 beschrieben sind. Besonders bevorzugt wird allerdings Triethanolamin (TEA) und Methyldiethanolamin (MDEA) verwendet. Die Verwendung von MDEA ist insbesondere für Aminwäschen von Kohlenwasserstoffgasen, wie Erdgas, bevorzugt, während die Verwendung von TEA bei der LPG-Wäsche vorteilhaft sein kann. So wird beispielsweise in US 5,877,386 beschrieben, dass TEA-haltige Aminlösungen eine geringere Löslichkeit in LPG besitzen, was die Aminverluste im Waschprozess verringert.

Bei den Aktivatoren B, die neben DMAP in der Waschlösung enthalten sein können, kann es sich z.B. um 3-Methylamino-1-propylamin oder Homopiperazin handeln.

Gegebenenfalls kann die erfindungsgemäße Waschflüssigkeit außerdem geringe Mengen eines physikalischen Absorptions- bzw. Lösungsmittel für saure Gase, wie z.B. Sulfolan, aliphatische Säureamide, N-Methylpyrolidon oder Methanol enthalten. Im allgemeinen betragen diese Mengen nicht mehr als 20%, bezogen auf die Waschlösung.

Die erfindungsgemäße Waschlösung erlaubt außerdem eine weitgehende Entfernung von H₂S aus dem Gasstrom. Auch COS und Mercaptane können zumindest teilweise entfernt werden.

Das erfindungsgemäße Verfahren kann mit den üblichen, in der Gaswäsche oder der LPG-Wäsche eingesetzten Waschvorrichtungen durchgeführt werden. Geeignete Waschvorrichtungen, die in einer Absorptionszone einen innigen Kontakt zwischen dem Fluidstrom und der Waschflüssigkeit gewährleisten, sind beispielsweise Füllkörper-, Packungs- und Bodenkolonnen, Radialstromwäscher, Strahlwäscher, Venturiwäscher und Rotations-Sprühwäscher, bevorzugt Packungs-, Füllkörper- und Bodenkolonnen.

In der Absorptionskolonne besitzt die Waschflüssigkeit typischerweise eine Temperatur von 40 bis 70 °C am Kolonnenkopf und von 50 bis 100 °C am Kolonnensumpf. Der Gesamtdruck in der Kolonne liegt im allgemeinen zwischen 1 und 120 bar. Mit Vorteil wird das erfindungsgemäße Verfahren im Absorptionsschritt bei 2 bar oder einem höheren Druck ausgeführt, bevorzugt bei 5 bar oder einem höheren Druck, besonders bevorzugt bei 10 bis 100 bar.

Das erfindungsgemäße Verfahren kann in einem Schritt oder in mehreren aufeinanderfolgenden Teilschritten durchgeführt werden. Im letzteren Fall wird der die sauren Gasbestandteile enthaltende Fluidstrom in jedem Teilschritt mit jeweils einem Teilstrom der Waschflüssigkeit in innigen Kontakt gebracht. Beispielsweise kann an unterschiedlichen Stellen der Absorptionszone ein Teilstrom des Absorptionsmittels zugeführt werden, wobei - etwa bei Verwendung einer Absorptionskolonne - die Temperatur der zugeführten Waschflüssigkeit in aufeinanderfolgenden Teilschritten in der Regel vom Sumpf zum Kopf der Kolonne abnimmt.

Die mit sauren Gasbestandteilen beladene Waschflüssigkeit und das gereinigte Gas werden voneinander getrennt und aus der Absortionszone abgeführt. Die Waschflüssigkeit kann dann regeneriert und anschließend mit verringerter Beladung in die Absorptionszone zurückgeführt werden. Typischerweise wird bei der Regeneration eine Druckentspannung der beladenen Waschflüssigkeit von einem in der Absorptionszone herrschenden höheren Druck auf einen niedrigeren Druck durchgeführt. Die Druckentspannung kann beispielsweise mittels eines Drosselventils geschehen. Ergänzend oder alternativ kann die Waschflüssigkeit über eine Entspannungsturbine geleitet werden, mit der ein Generator angetrieben und elektrische Energie gewonnen werden kann. Die so der Waschflüssigkeit bei der Entspannung entzogene Energie lässt sich beispielsweise auch zum Antrieb von Flüssigkeitspumpen im Kreislauf der Waschflüssigkeit verwenden.

Die Freisetzung der sauren Gasbestandteile kann beim Regenerieren der Waschflüssigkeit beispielsweise in einer Entspannungskolonne, beispielsweise einem senkrecht oder waagrecht eingebauten Flashbehälter oder einer Gegenstromkolonne mit Einbauten erfolgen. Es können mehrere Entspannungskolonnen hintereinander geschaltet werden, in denen bei unterschiedlichen Drücken regeneriert wird. Beispielsweise kann die Waschflüssigkeit zunächst in einer Vorentspannungskolonne bei hohem Druck, der beispielsweise ca. 1,5 bar über dem Partialdruck der sauren Gasbestandteile in der Absorptionszone liegt, und anschließend in einer Hauptentspannungskolonne bei niedrigem Druck, beispielsweise bei 1 bis 2 bar absolut, regeneriert werden. Bei einem mehrstufigen Entspannungsprozess werden in der ersten Entspannungskolonne vorzugsweise Inertgase, wie absorbierte Komponenten des zu reinigenden Gases, und in den nachfolgenden Entspannungskolonnen die sauren Gasbestandteile freigesetzt.

Mit Hilfe einer vorzugsweise ebenfalls vorgesehenen Strippung mit einem inerten Fluid können bei der Regeneration weitere Sauergase aus der Waschflüssigkeit entfernt werden. Dazu werden die Waschflüssigkeit und ein Strippungsmittel, vorteilhaft ein heißes inertes Gas, wobei Stickstoff oder Wasserdampf bevorzugt sind, im Gegenstrom durch eine mit Füllkörpern, Packungen oder Böden versehene Desorptionskolonne geleitet. Bevorzugt beträgt der Druck bei der Strippung 1 bis 3 bar absolut und die Temperatur 90 bis 130 °C.

Eine Regeneration der Waschflüssigkeit in mehreren aufeinanderfolgenden Teilschritten, wobei die Beladung der Waschflüssigkeit mit Sauergasbestandteilen mit jedem Teilschritt abnimmt, wird beispielsweise in US 4,336,233 beschrieben. Danach wird eine Grobwäsche mit reinem Entspannungskreislauf ohne Strippung durchgeführt, wobei die beladene Waschflüssigkeit über eine Entspannungsturbine entspannt und schrittweise in einer Vorentspannungskolonne und einer Hauptentspannungskolonne regeneriert wird. Diese Variante kommt vor allem dann zum Einsatz, wenn die auszuwaschenden sauren Gase hohe Partialdrücke aufweisen und wenn an die Reinheit des Reingases nur geringe Anforderungen gestellt werden.

In einer weiteren bevorzugten Ausführungsform des erfindungsgemäßen Verfahrens sind die in aufeinanderfolgenden Teilschritten des Wasch- bzw. Absorptionsvorgangs eingesetzten Teilströme der Waschflüssigkeit durch aufeinanderfolgende Teilschritte des Regenerationsvorgangs erhältlich und weisen eine abnehmende Beladung mit sauren Gasbestandteilen auf. Dabei ist insbesondere ein Verfahren bevorzugt bei dem das die sauren Bestandteile enthaltende Feedgas oder LPG nacheinander mit einem ersten Teilstrom der Waschflüssigkeit, der nach teilweiser Regenerierung in einer Entspannungskolonne und vor der Strippung, und einem zweiten Teilstrom der Waschflüssigkeit, der nach der Strippung erhalten wird, in innigen Kontakt gebracht wird.

Beispielsweise kann, wie in US 4,336,233 beschrieben, der Absorptionsschritt in zwei Teilschritten, einer Grob- und einer Feinwäsche, und der Regenerierungsschritt schrittweise durch Druckentspannung in einer Entspannungsturbine, einer Vorentspannungskolonne und einer Hauptentspannungskolonne, sowie durch anschließende Strippung durchgeführt werden. In diesem Fall kann der Teilstrom der Waschflüssigkeit für die Grobwäsche von der Hauptentspannungskolonne und der Teilstrom für die Feinwäsche von der Strippung stammen.

Das regenerierte Absorptionsmittel wird üblicherweise vor Einspeisung in die Absorptionszone über einen Wärmetauscher geleitet und auf die für den Waschvorgang erforderliche Temperatur gebracht. Beispielsweise kann der die Strippkolonne verlassenden regenerierten Waschflüssigkeit Wärme entzogen und der noch Sauergasbestandteile enthaltenden Waschflüssigkeit vor deren Eintritt in die Strippkolonne zugeführt werden.

Das erfindungsgemäße Verfahren kann mit typischen zur Gaswäsche und anschließender Regeneration der Waschflüssigkeit verwendeten Anlagenkonfigurationen durchgeführt werden, wie sie beispielsweise in US 4,336,233 für einen einstufigen bzw. zweistufigen Waschprozess und besonders ausführlich in EP-A 0 322 924 für einen einstufigen Waschprozess mit Entspannungs- und Strippungsschritt beschrieben sind. Auf beide Dokumente wird hiermit ausdrücklich Bezug genommen.

Das erfindungsgemäße Verfahren wird im folgenden unter Bezugnahme auf die beigefügte Zeichnung näher erläutert.

In der Zeichnung zeigt
- Figur 1: eine schematische Darstellung einer Anlage zur Durchführung des erfindungsgemäßen Verfahrens in einem einstufigen Waschprozess, dem sich eine Regeneration der Waschflüssigkeit mit Entspannungs- und Strippkolonnen anschließt;
- Figur 2: ein Diagramm zur relativen CO₂-Beladung einer erfindungsgemäßen Waschflüssigkeit im Gleichgewicht mit einem Gas mit 10 Vol% CO₂ in Abhängigkeit vom Gesamtdruck;
- Figur 3: ein Diagramm zur relativen H₂S-Beladung einer erfindungsgemäßen Waschflüssigkeit im Gleichgewicht mit einem Gas mit 5 Vol% H₂S in Abhängigkeit vom Gesamtdruck;

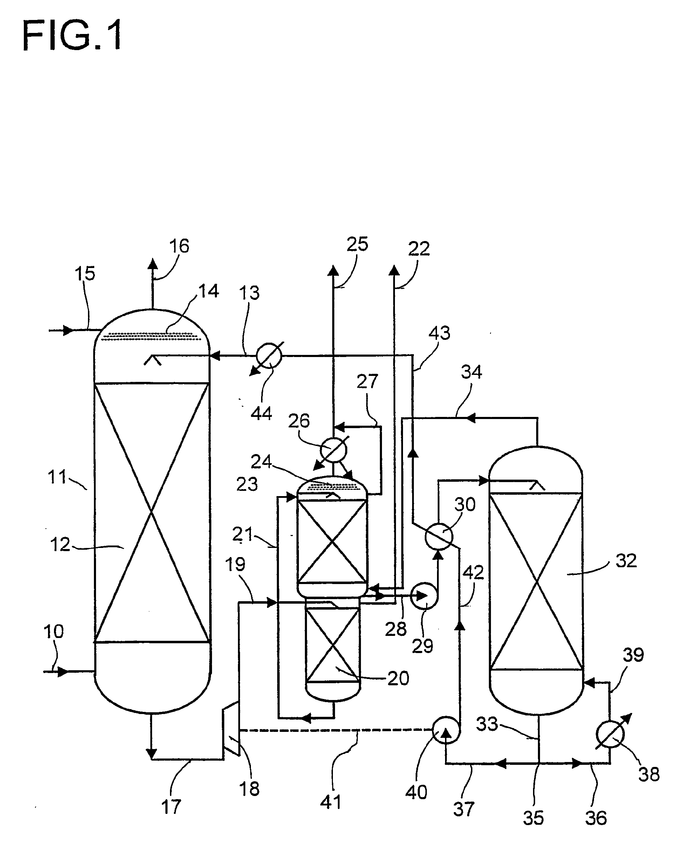

Bezugnehmend auf Figur 1 erkennt man eine bevorzugte Anordnung zur Durchführung des erfindungsgemäßen Verfahrens, wie sie beispielsweise zum Entfernen von Sauergasen aus einem CO₂ und weitere Sauergase enthaltenden Erdgasstrom verwendet wird.

Das Fluidgemisch, welches beispielsweise Erdgas als Wertprodukt enthalten kann, und darüber hinaus Sauergase wie H₂S, CO₂ und COS umfasst, wird über eine Zuleitung 10 in eine Absorptionskolonne 11 geleitet. Vor dem Eintritt in die Absorptionskolonne können (nicht dargestellte) Trenneinrichtungen vorgesehen sein, welche beispielsweise Flüssigkeitströpfchen aus dem Rohgas entfernen. Die Absorptionskolonne 11 besitzt eine Absorptionszone 12, in welcher ein inniger Kontakt des sauren Rohgases mit einer an Sauergasen armen Waschflüssigkeit gewährleistet wird, die über eine Zuleitung 13 in den Kopfbereich der Absorptionskolonne 11 gelangt und im Gegenstrom zu dem zu behandelnden Gas geführt wird. Der Absorptionsbereich 12 kann beispielsweise durch Böden, etwa Sieb- oder Glockenböden, oder durch Packungen realisiert werden. Typischerweise werden 20 bis 34 Böden verwendet. Im Kopfbereich der Absorptionskolonne 11 können Rückwaschböden 14 angeordnet sein, um den Verlust an leicht flüchtigen Bestandteilen der Waschflüssigkeit zu verringern. Die beispielsweise als Glokkenböden ausgebildeten Rückwaschböden 14 werden über eine Kondensatleitung 15 mit Wasser gespeist, durch welches das behandelte Gas geleitet wird.

Der von Sauergasbestandteilen weitgehend befreite Erdgasstrom verlässt die Absorptionskolonne 11 über einen Kopfabzug 16. In der Leitung 16 kann - insbesondere wenn in der Kolonne 11 keine Rückwaschböden vorgesehen sind, ein (nicht dargestellter) Abscheider angeordnet sein, welcher mitgerissene Waschflüssigkeit aus dem Gasstrom entfernt.

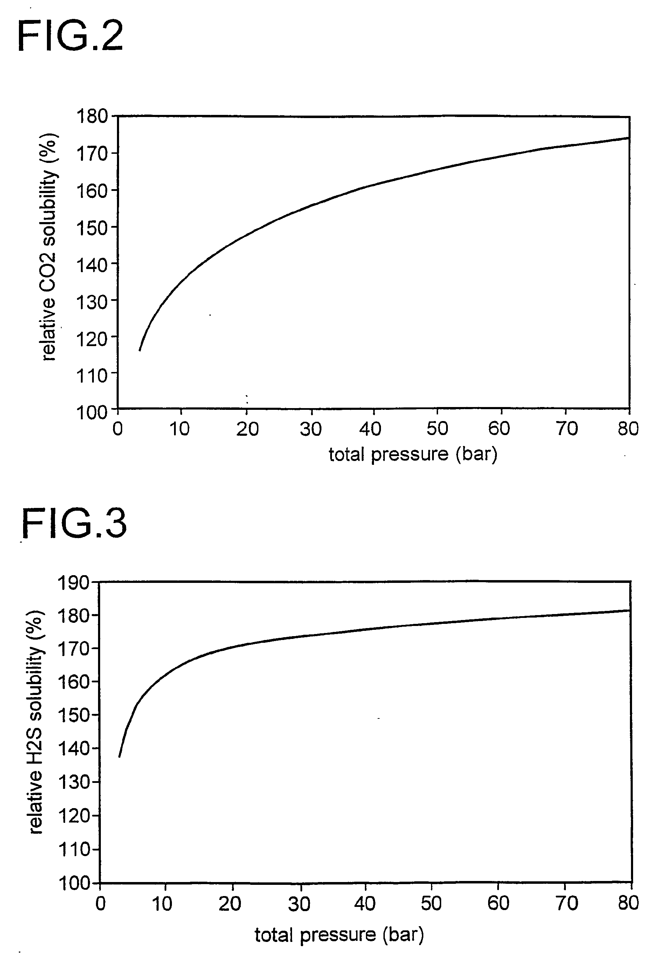

Anstelle der hier beschriebenen einstufigen Absorptionseinrichtung kann auch eine zweistufige Variante verwendet werden, wie sie beispielsweise in Figur 2 des US-Patentes 4,336,233 dargestellt ist.

Die sauergashaltige Waschflüssigkeit verlässt die Absorptionskolonne 11 über eine Leitung 17 und gelangt über eine optional vorhandene Entspannungsturbine 18 und eine Leitung 19 in den Kopfbereich einer ersten Entspannungskolonne 20. In der Entspannungskolonne 20 wird der Druck der Waschflüssigkeit plötzlich erniedrigt, so dass die leichteren Komponenten des zu reinigenden Gases aus der Waschflüssigkeit abdampfen können. Diese Komponenten können verbrannt oder in Absorptionskolonne 11 zurückgeführt werden. Die Waschflüssigkeit verlässt die erste Entspannungskolonne 20 über eine Leitung 21 am Boden der Kolonne, während die abgedampften Komponenten des zu reinigenden Gases über eine Leitung 22 am Kopf der Entspannungskolonne 20 abgezogen werden.

Im dargestellten Beispiel gelangt die Waschflüssigkeit anschließend in eine zweite Entspannungskolonne 23, die beispielsweise als Niederdruckkolonne (d.h. als sogenannter Low-Pressure-Flash) ausgebildet sein kann. Schwerer flüchtige Sauergase dampfen, nach Durchtritt durch gegebenenfalls vorgesehene Rückwaschböden 24, über die Leitung 25 ab. Am Kopf der zweiten Entspannungskolonne 23 kann ein Wärmetauscher mit Kopfverteiler oder Kondensator 26 vorgesehen sein, der mitgerissene Tröpfchen der Waschflüssigkeit in die Entspannungskolonne zurückführt. Der Kondensator 26 kann gegebenenfalls durch eine Bypassleitung 27 überbrückt werden. Die Waschflüssigkeit verlässt die zweite Entspannungskolonne 23 über eine Leitung 28 und wird über eine Pumpe 29 durch einen Wärmetauscher 30 gepumpt, wo sie Wärme von der zur Absorptionskolonne 11 zurückgeführten, regenerierten Waschflüssigkeit aufnimmt. Anschließend gelangt die Waschflüssigkeit in den Kopfbereich einer Strippkolonne 32, in welchem die Waschflüssigkeit im Gegenstrom zu einem Gasstrom, beispielsweise Wasserdampf, geführt wird. In der Strippkolonne 32 werden restliche Sauergasbestandteile aus der Waschflüssigkeit entfernt. Die Waschflüssigkeit verlässt den Sumpfbereich der Strippkolonne 32 über eine Leitung 33, während die abgestrippten Sauergasbestandteile über eine Leitung 34 in den Sumpfbereich der zweiten Entspannungskolonne 23 zurückgeführt werden. Die durch die Leitung 33 abströmende Waschflüssigkeit gelangt zu einem Verteiler 35, an welchem ein Teil der Waschflüssigkeit über eine Leitung 36 zu einem Aufkocher 38 transportiert wird, der die Flüssigkeit erhitzt und als Dampf über eine Leitung 39 in das Stripprohr zurückführt. Ein anderer Teil der Waschflüssigkeit gelangt vom Verteiler 35 über die Leitung 37 zu einer Pumpe 40, die, wie schematisch durch den Übertragungsweg 41 angedeutet ist, mit der Entspannungsturbine 18 verbunden ist. Die Entspannungsturbine liefert einen Teil der zum Antrieb der Pumpe 40 nötigen Energie. Über eine Leitung 42 gelangt die regenerierte, an Sauergasen arme Waschflüssigkeit in den Wärmetauscher 30, wo sie Wärme auf die durch die Leitung 28 in die Strippkolonne 32 geleitete Waschflüssigkeit überträgt. Die regenerierte Waschflüssigkeit wird dann über die Leitungen 43 und 13 in die Absorptionskolonne 11 zurückgeführt, wo sie erneut Sauergase aufnehmen kann. Vor Eintritt in die Absorptionskolonne kann ein weiterer Wärmetauscher 44 vorgesehen sein, welcher die Waschflüssigkeit auf die erforderliche Zulauftemperatur abkühlt. Ebenso können Filter und andere (nicht dargestellte) Reinigungseinrichtungen vorgesehen sein, um die Waschflüssigkeit vor ihrem Eintritt in die Absorptionskolonne 11 zu reinigen.

Im Bereich der Leitungen 43,13 können auch (nicht dargestellte) Zuleitungen für frische Waschflüssigkeit vorgesehen sein, falls die erforderliche Zulaufmenge nicht allein durch regenerierte Waschflüssigkeit aufrechterhalten werden kann.

Die Menge an zulaufender Waschflüssigkeit kann durch die Leistung der Pumpen und durch (nicht dargestellte) Ventil- und Drosseleinrichtungen reguliert werden.

Im folgenden werden Vorteile der Erfindung anhand von Vergleichsbeispielen näher erläutert.

### Beispiele:

### 1. CO₂-Gleichgewichtsbeladung

Es wurden Berechnungen mit einem Phasengleichgewichtsmodell (Pitzer-Modell; Kenneth S. Pitzer, Activity Coefficients in Electrolyte Solutions 2nd ed., CRC-Press, 1991, Chapt. 3, Ion Interaction Approach:Theory and Data Correlation; die Parameter des Modells wurden an Phasengleichgewichtsmessungen angepasst) durchgeführt. Es wurde ein wässriges Absorptionsmittel zugrunde gelegt, das 5 Gew.% Piperazin, 35 Gew.% DIMAP und 60 Gew.% Wasser enthält. In Figur 2 ist die relative CO₂-Beladung (in der Figur als "rel. CO₂ solubility" bezeichnet) dieses Absorptionsmittels in Abhängigkeit vom Gesamtdruck im Gleichgewicht mit einem Gas, welches 10 Vol.%.CO2 enthält, dargestellt. Bezogen ist die CO₂-Beladung der erfindungsgemäßen Waschflüssigkeit auf die CO₂-Gleichgewichtsbeladung bei einem Gesamtdruck von 1 bar einer Vergleichswaschflüssigkeit, die 40 Gew.% DIMAP% und 60 Gew.% Wasser enthält. Die erfindungsgemäße Waschflüssigkeit weist für Gesamtdrücke über 2 bar eine höhere Beladbarkeit mit CO₂ auf, die bei dem höchsten angegebenen Gesamtdruck auf den 1,7-fachen Wert des Vergleichs übersteigt.

### 2. H₂S-Gleichgewichtsbeladung

Die H₂S-Gleichgewichtsbeladung wurde analog derjenigen von CO₂ gemäß Beispiel 1 bestimmt.

Es wurde wiederum ein wässriges Absorptionsmittel zugrunde gelegt, das 5 Gew.% Piperazin, 35 Gew.% DMAP und 60 Gew.% Wasser enthält.

In Figur 3 ist die relative H₂S-Beladung ("rel. H₂S solubility") der erfindungsgemäßen Waschflüssigkeit in Abhängigkeit vom Gesamtdruck im Gleichgewicht mit einem Gas, welches 5 Vol.% H₂S enthält, dargestellt. Bezogen wurde die Beladung auf die H₂S-Gleichgewichtsbeladung einer Vergleichswaschflüssigkeit, die 40 Gew.% DMAP und 60 Gew.% Wasser enthält, bei einem Gesamtdruck von 1 bar. Die erfindungsgemäße Waschflüssigkeit weist für Drücke > 2 bar eine höhere Beladbarkeit mit H₂S auf, die bei dem höchsten angegebenen Gesamtdruck etwa den 1,8-fachen Wert des Vergleichs erreicht.

### 2. Simultane CO₂/H₂S-Beladung

Die Beladungen wurden analog derjenigen von CO₂ gemäß Beispiel 1 bestimmt.

Tabelle 1 zeigt für zwei Gase mit unterschiedlichem Sauergasgehalt bei verschiedenen Gesamtdrücken die Gleichgewichtsbeladung einer erfindungsgemäße Waschflüssigkeit mit 5 Gew.% Piperazin, 35 Gew.% DMAP und 60 Gew.% Wasser bezogen auf die Gleichgewichtsbeladung einer Waschlösung mit 5 Gew.% Piperazin, 35 Gew.% MDEA und 60 Gew.% Wasser. Wie man sieht ist sowohl die CO2- als auch die H2S-Beladung erhöht.

**Tabelle 1**

| Gesamtdruck/bar | CO₂-Gehalt/vol.% | H₂S-Gehalt/vol.% | Rel. CO₂-Beladung/% | Rel. H₂S-Beladung/% |
|---|---|---|---|---|
| 8 | 15 | 5 | 182 | 152 |
| 15 | 5 | 5 | 188 | 161 |

## Patentansprüche

1. Verfahren zum Entsäuern eines Fluidstroms, der Sauergase als Verunreinigungen enthält, wobei man in wenigstens einem Absorptionsschritt den Fluidstrom mit einer Waschflüssigkeit in innigen Kontakt bringt, bei der es sich um eine wässrige Lösung enthaltend
a) tertiäre aliphatische Alkanolamine (Alkanolamin A), wobei es sich bei mindestens 30 Gew.% der tertiären aliphatischen Alkanolamine um 3-Dimethylamino-1-propanol handelt und
b) sekundäre aliphatische Amine (Aktivator B), wobei es sich bei mindestens 20 Gew.% der sekundären aliphatischen Amine um Piperazin handelt,
und man den von Sauergasen weitgehend gereinigten Fluidstrom und die mit Sauergasen beladene Waschflüssigkeit voneinander trennt, wobei der Absorptionsschritt bei einem Gesamtdruck von 2 bar oder einem höheren Druck vorgenommen wird.

2. Verfahren nach Anspruch 1, wobei die Konzentration an Alkanolamin A, bezogen auf die Waschlösung, 10 bis 60 Gew.-% beträgt.

3. Verfahren nach Anspruch 1 oder 2, wobei die Konzentration an Aktivator B, bezogen auf die Waschlösung, 0,1 bis 50 Gew.-% beträgt.

4. Verfahren gemäß einem der Ansprüche 1 oder 2, **dadurch gekennzeichnet, dass** man die Waschflüssigkeit anschließend regeneriert und dann erneut der Absorptions- bzw. Extraktionszone zuführt.

5. Verfahren gemäß Anspruch 4, **dadurch gekennzeichnet, dass** man die Waschflüssigkeit durch ein- oder mehrstufiges Entspannen regeneriert.

6. Verfahren gemäß Anspruch 4, **dadurch gekennzeichnet, dass** man die Waschflüssigkeit nach dem Entspannen durch Strippen mit einem inerten Fluid, insbesondere Stickstoff oder Wasserdampf, regeneriert.

7. Verfahren gemäß einem der Ansprüche 1 bis 6, **dadurch gekennzeichnet, dass** man den Absorptionsschritt, in mehreren aufeinanderfolgenden Teilschritten durchführt, wobei man den sauergashaltigen Fluidstrom in jedem der Teilschritte mit jeweils einem Teilstrom der Waschflüssigkeit in Kontakt bringt.

8. Verfahren gemäß Anspruch 7, **dadurch gekennzeichnet, dass** man die Teilströme der Waschflüssigkeit nach jeweils aufeinanderfolgenden Teilschritten des Regenerationsprozesses der Waschflüssigkeit gewinnt, so dass die Teilströme der Waschflüssigkeit eine abnehmende Beladung an Sauergasen aufweisen.

## Claims

1. A process for deacidifying a fluid stream comprising acid gases as impurities, which comprises bringing the fluid stream into intimate contact with a scrubbing liquid in at least one absorption step, where the scrubbing liquid is an aqueous solution comprising
a) tertiary aliphatic alkanolamines (alkanolamine A), where at least 30% by weight of the tertiary aliphatic alkanolamines is 3-dimethylamino-1-propanol and
b) secondary aliphatic amines (activator B), where at least 20% by weight of the secondary aliphatic amines is piperazine,
and the fluid stream substantially freed from the acid gases and the scrubbing liquid laden with acid gases are separated from one another, wherein the absorption step is performed at a total pressure of 2 bar, or at a higher pressure.

2. The process according to claim 1, wherein the concentration of alkanolamine A, based on the scrubbing solution, is from 10 to 60% by weight.

3. The process according to claim 1 or 2, wherein the concentration of activator B, based on the scrubbing solution, is from 0.1 to 50% by weight.

4. The process according to one of claims 1 or 2, wherein the scrubbing liquid is then regenerated and then recirculated to the absorption or extraction zone.

5. The process according to claim 4, wherein the scrubbing liquid is regenerated by single- or multistage expansion.

6. The process according to claim 4, wherein the scrubbing liquid, after the expansion, is regenerated by stripping with an inert fluid, in particular nitrogen or steam.

7. The process according to one of claims 1 to 6, wherein the absorption step is carried out in a plurality of sequential substeps, the acid-gas-containing fluid stream being brought into contact with a substream of the scrubbing liquid in each case in each of the substeps.

8. The process according to claim 7, wherein the scrubbing liquid substreams are produced after respective sequential substeps of the regeneration process of the scrubbing liquid, so that the scrubbing liquid substreams have a decreasing loading of acid gases.

## Revendications

1. Procédé de désacidification d'un courant fluide, qui contient des gaz acides comme impuretés, dans lequel, dans au moins une étape d'absorption, on met en contact intime le courant fluide avec un liquide de lavage qui est une solution aqueuse contenant
a) des alcanolamines aliphatiques tertiaires (alcanolamine A), au moins 30 % en poids des alcanolamines aliphatiques tertiaires étant du 3-diméthylamino-1-propanol, et
b) des amines aliphatiques secondaires (activeur B), au moins 20 % en poids des amines aliphatiques secondaires étant de la pipérazine,
et on sépare l'un de l'autre le courant fluide profondément purifié de gaz acides et le liquide de lavage chargé de gaz acides, l'étape d'absorption étant effectuée à une pression totale de 2 bars ou à une pression supérieure.

2. Procédé suivant la revendication 1, dans lequel la concentration en alcanolamine A est, par rapport à la solution de lavage, de 10 à 60 % en poids.

3. Procédé suivant la revendication 1 ou 2, dans lequel la concentration d'activeur B est, par rapport à la solution de lavage, de 0, 1 à 50 % en poids.

4. Procédé suivant l'une des revendications 1 ou 2, **caractérisé en ce qu'**on régénère ensuite le liquide de lavage et on l'amène alors à nouveau à la zone d'absorption ou respectivement d'extraction.

5. Procédé suivant la revendication 4, **caractérisé en ce qu'**on régénère le liquide de lavage par détente en une ou plusieurs étapes.

6. Procédé suivant la revendication 4, **caractérisé en ce que**, après la détente, on régénère le liquide de lavage par stripage avec un fluide inerte, en particulier de l'azote ou de la vapeur d'eau.

7. Procédé suivant l'une des revendications 1 à 6, **caractérisé en ce qu'**on effectue l'étape d'absorption en plusieurs étapes partielles successives, en amenant en contact le courant fluide contenant du gaz acide dans chacune des étapes partielles avec chaque fois un courant partiel du liquide de lavage.

8. Procédé suivant la revendication 7, **caractérisé en ce qu'**on produit les courants partiels du liquide de lavage après les étapes partielles respectivement successives du processus de régénération du liquide de lavage de façon à ce que les courants partiels du liquide de lavage présentent une charge décroissante en gaz acides.
